Europäisches Patentamt

European Patent Office

Office européen des brevets

(19)

(11) EP 0 742 397 B1

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(21) Anmeldenummer: **94923844.8**

(22) Anmeldetag: **20.07.1994**

(51) Int Cl.6: **F16K 31/02**

(86) Internationale Anmeldenummer:
**PCT/RU94/00161**

(87) Internationale Veröffentlichungsnummer:
**WO 95/20739 (03.08.1995 Gazette 1995/33)**

(54) **ELEKTROMAGNETISCHES VENTIL**

ELECTROMAGNETIC VALVE

VANNE ELECTROMAGNETIQUE

(84) Benannte Vertragsstaaten:
**DE FR**

(30) Priorität: **26.01.1994 RU 94002574**

(43) Veröffentlichungstag der Anmeldung:
**13.11.1996 Patentblatt 1996/46**

(73) Patentinhaber: **AKTSIONERNOE OBSCHESTVO ZAKRYTOGO TIPA " KRIOGENNAYA TEKHNOLOGIYA"**
**Moscow, 109147 (RU)**

(72) Erfinder:
• **VANINSKY, Natan Khaimovich**
**Moscow, 105077 (RU)**
• **RAFIKOV, Leonard Gilyazovich**
**Moscow, 109172 (RU)**
• **BORISENKO, Nicolai Nicolaevich**
**Moscow, 109172 (RU)**

(74) Vertreter: **Andrae, Steffen, Dr. et al**
**Andrae Flach Haug**
**Balanstrasse 55**
**81541 München (DE)**

(56) Entgegenhaltungen:
EP-A- 0 148 018          EP-A- 0 304 186
GB-A- 2 095 797          SU-A- 1 606 790
US-A- 3 707 992          US-A- 3 878 859
US-A- 4 295 631          US-A- 4 540 154
US-A- 4 681 142

EP 0 742 397 B1

## Beschreibung

### Technisches Gebiet

Die Erfindung betrifft den Maschinenbau, genauer eine Armatur, die in verschiedenen Hauptleitungen, Rohrleitungen und anderen Verbindungen montiert werden kann, und noch genauer elektromagnetische Ventile.

### Bisheriger Stand der Technik

Es sind elektromagnetische Ventile bekannt, die ein Gehäuse mit einem Sitz enthalten, der von einem Haupt-Absperrelement mit einer Austritts- und einer Zentralöffnung verschließbar ist, über dem ein die Austrittsöffnung verschließendes Hilfs-Absperrelement angeordnet ist, das mit dem Anker eines elektromagnetischen Antriebs vereinigt ist, wobei zwischen der Spule und dem Anker eine diamagnetische Hülse angeordnet ist, und die Austrittsöffnung ist im Austrittsrohr für das Medium ausgebildet, das durch die zentrale Öffnung des Haupt-Absperrelements hindurchtritt (vgl. US Nr. 4295631, Klasse 251-30, 1988).

Dieses Ventil ist bei seinem Einsatz ausreichend sicher, ermöglicht jedoch nicht eine Entlastung des Absperrelements von der einseitigen Einwirkung des Arbeitsmediums, und zwar deshalb, weil es nicht möglich ist, das Arbeitsmedium unter das Ventil zu führen.

Es ist auch ein elektromagnetisches Ventil bekannt, das ein Gehäuse mit einem Sitz aufweist, der von einem Absperrelement verschließbar ist, das eine nicht-metallische Ringdichtung aufweist, sowie einen Elektromagnetantrieb mit einem Magnetleiter, der einen unteren und einen oberen Flansch aufweist, mit einem hermetisch abdichtenden Trennrohr, mit einem Kern, mit einem Hohlraum für das Arbeitsmedium und mit einer Rückstellfeder, wobei das hermetisch abdichtende Trennrohr mit einem Abschnitt aus einem ferromagnetischen Material sowie mit einem darunter angeordneten Abschnitt aus einem schwach magnetischen Material ausgeführt ist.

Der Kern ist über eine Stange mit dem Absperrelement verbunden, wobei die Stange in einer Führungshülse mit einem Dichtring angeordnet ist, der im Hohlraum des Magnetantriebs auf der Seite des Absperrelements so angeordnet ist, daß er sich längs der Achse der Stange verschieben kann (vgl. RU Nr. 1606790, Klasse F 16K31/02, 1988).

Jedoch gewährleistet auch dieses Ventil nicht die Entlastung des Absperrelements von der einseitigen Einwirkung des Arbeitsmediums aus den gleichen Gründen wie die vorausgehende Einrichtung.

### Offenbarung der Erfindung

Es ist Aufgabe der vorliegenden Erfindung, ein konstruktiv einfaches und bei seinem Einsatz sicheres elektromagnetisches Ventil zu schaffen, das eine Arbeit in einem weiten Druckbereich ohne Druckgefälle am Absperrelement gewährleistet.

Diese Aufgabe wird dadurch gelöst, daß bei einem elektromagnetischen Ventil, das ein Gehäuse mit einem Sitz, der von einem Absperrelement verschließbar ist, das eine nicht-metallische Dichtung aufweist, einen Elektromagnetantrieb mit einem Magnetleiter, der einen unteren und einen oberen Flansch aufweist, mit einem Kern, der einen Hohlraum für das Arbeitsmedium aufweist, sowie mit einem hermetisch abdichtenden Trennrohr zwischen dem Magnetleiter und dem Kern, sowie eine Rückstellfeder aufweist, wobei das hermetisch abdichtende Trennrohr aus einem Abschnitt besteht, der aus einem ferromagnetischen Material hergestellt ist, sowie einem darunter angeordneten Abschnitt aus einem schwach magnetischen Material, der Kern mit einer nicht-metallischen Ringdichtung versehen ist, und das hermetisch abdichtende Trennrohr mit einem dritten Abschnitt versehen ist, der aus einem ferromagnetischen Material hergestellt ist und unter dem Abschnitt angeordnet ist, der aus einem schwach magnetischen Material hergestellt ist, wobei der Ventilsitz einen mittleren Durchmesser aufweist, der dem Innendurchmesser des genannten dritten Abschnitts gleich ist, und wobei eine nicht-metallische Ringdichtung des Kerns gegenüber dem genannten dritten Abschnitt und unterhalb des unteren Flanschs des Magnetleiters in einem Abstand angeordnet ist, der nicht geringer ist als der Hub des Kerns.

In einzelnen Fällen wird ein gleichartiger positiver Effekt dadurch erreicht, daß in dem Ventil, das durch die oben aufgezählte Gesamtheit von Merkmalen charakterisiert ist,

a) der Sitz des Ventils mit einem Ringvorsprung mit einem dreieckigen Querschnitt mit symmetrischem Profil und einer abgerundeten Spitze ausgeführt ist, wobei die nicht-metallische Dichtung des Absperrelements aus Gummi hergestellt ist, wobei die folgende Beziehung erfüllt wird:

$$\frac{h_b}{b_y} = \frac{0,5 \div 0,6}{1,5 \div 1,8}$$

wenn

$\alpha = 60°$
$r = 0,2 \div 0,3$ mm

worin

$h_b =$  die Höhe des Ringvorsprungs des Sitzes;
$b_y =$  die Dicke der nicht-metallischen Dichtung des Absperrelements;

$\alpha =$     der Winkel an der Spitze des Vorsprungs mit dreieckigem Querschnitt;

$r =$     der Radius der Abrundung des Vorsprungs;

b) der Hohlraum für das Arbeitsmedium im Kern in Form eines axialen Kanals ausgeführt ist und im oberen Teil einen Bereich mit einem größeren Durchmesser aufweist, in dem eine Rückstellfeder angeordnet ist;

c) der Kern mit einer Führungshülse versehen ist, die aus einem Material mit einem niedrigen Reibungskoeffizienten hergestellt ist;

d) unter der nicht-metallischen Ringdichtung ein Element angeordnet ist, das mit einem Schmiermittel getränkt ist.

Ein zusätzlicher technischer Effekt ist, daß die Arbeit des Ventils bei einem Ausfall der elektrischen Versorgung dadurch gewährleistet wird, daß im unteren Teil des Gehäuses eine Hand-Ersatzbetätigung angeordnet ist.

**Kurze Beschreibung der Zeichnungsfiguren**

In Figur 1 ist schematisch das beschriebene elektromagnetische Ventil gezeigt;

in Figur 2 ist das dreiteilige hermetisch abdichtende Trennrohr dargestellt;

in Figur 3 ist der Sitz mit dem Absperrelement in vergrößertem Maßstab dargestellt.

**Beste Ausführungsform der Erfindung**

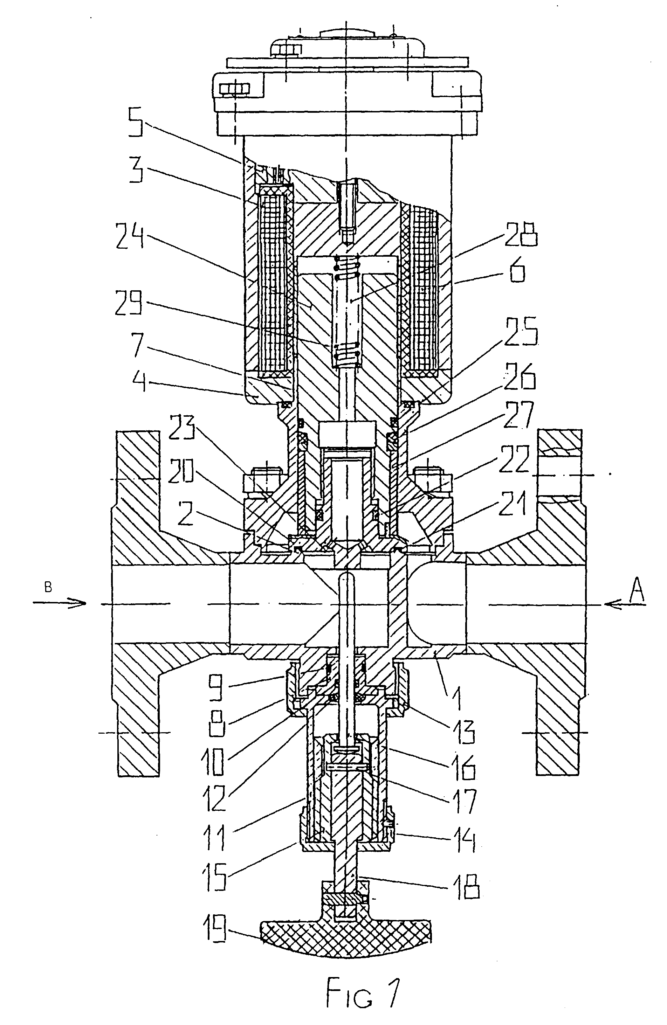

An dem Gehäuse 1 mit dem Sitz 2 (vgl. Figur 1) ist ein Elektromagnetantrieb mit einem Magnetleiter 3 befestigt, der einen unteren Flansch 4 und einen oberen Flansch 5, eine Spule 6, und ein dreiteiliges hermetisch abdichtendes Trennrohr 7 aufweist.

Im unteren Teil des Gehäuses 1 ist eine Hand-Ersatzeinrichtung angeordnet, die aus einer Hülse 8, die nicht-metallische Dichtungen 9 und 10 aufweist, einer Hülse 11, einem mit einem Schmiermittel getränkten Element 12, Überwurfmuttern 13 und 14 und einer Spindel besteht, die eine Stange 16, einen Stift 17, eine Stange 18 und ein Handrad 19 aufweist. Der Sitz 2 wird von dem Absperrelement 20 verschlossen, das eine nicht-metallische Dichtung 21 aufweist, die aus gummitechnischen oder polymeren Materialien hergestellt ist, sowie eine nicht-metallische Ringdichtung 22 sowie eine Öffnung 23 für den Durchtritt des Arbeitsmediums.

Das Absperrelement 20 ist mittels eines Gewindes mit dem Kern 24 verbunden, der eine nicht-metallische Ringdichtung 25 aufweist, unter der ein mit Schmiermittel getränktes Element 26 sowie eine Führungshülse 27 aus einem Material mit einem niedrigen Reibungskoeffizienten angeordnet ist. Im Kern 24 gibt es einen axialen Kanal 28 für den Durchtritt des Arbeitsmediums, der in seinem oberen Teil einen sich erweiternden Bereich für die Aufnahme einer Rückstellfeder 29 aufweist.

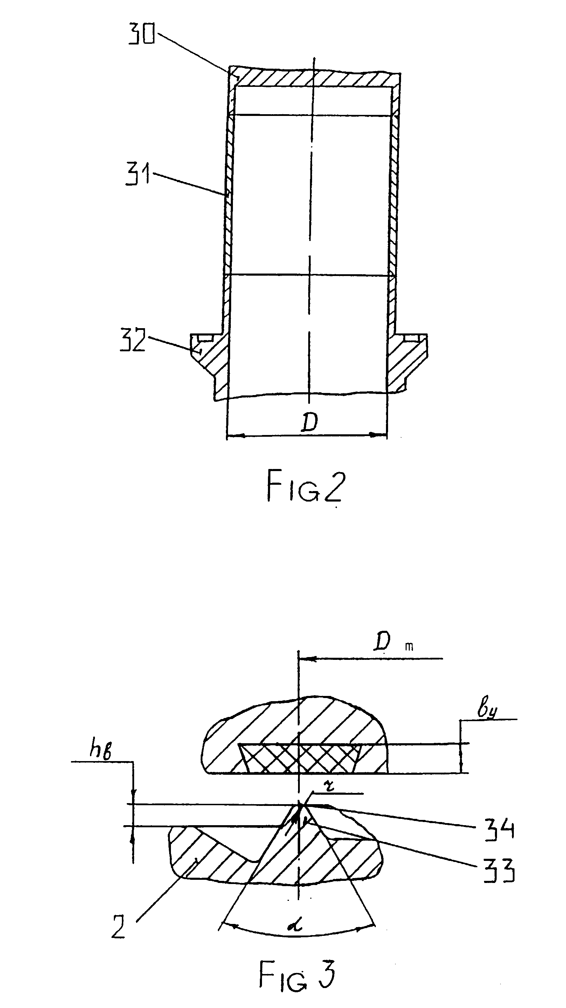

Das dreiteilige hermetisch abdichtende Trennrohr 7 (vgl. Figur 2) ist aus einem oberen Abschnitt 30, der aus einem ferromagnetischen Material mit einem niedrigen Wert für die Koerzitivfeldstärke mit einem Wert von 24 bis 256 A/m hergestellt ist, einem darunter angeordneten mittleren Abschnitt 31, der aus einem schwach magnetischen Material hergestellt ist, und einem dritten (unteren) Abschnitt 32 zusammengesetzt, der aus einem Material hergestellt ist, das dem Material des oberen Abschnitts (des Anschlags) 30 entspricht.

Der dritte Abschnitt 32 ist unter dem mittleren Abschnitt 31 und gegenüber dem unteren Flansch 4 des Magnetleiters angeordnet, wobei der Sitz 2 des Ventils mit einem mittleren Durchmesser ($D_m$) ausgebildet ist, der dem Innendurchmesser (D) des hermetisch abdichtenden Trennrohrs gleich ist.

Die nicht-metallische Ringdichtung 25 des Kerns ist gegenüber dem dritten Abschnitt 32 des hermetisch abdichtenden Trennrohrs und unterhalb des unteren Flanschs 4 des Magnetleiters in einem Abstand angeordnet, der nicht kleiner ist als der Hub des Kerns 24.

Der Sitz 2 des Ventils weist einen Ringvorsprung 33 (vgl. Figur 3) mit einem dreieckigen Querschnitt mit einem Winkel $\alpha = 60°$ an der Spitze und mit einem symmetrischen Profil mit einer Abrundung 34 auf. Der Radius der Abrundung liegt im Bereich von 0,2 bis 0,3 mm. Dabei wird die Ausgestaltung des Sitzes und des Absperrelements durch die folgende Beziehung charakterisiert:

$$\frac{h_b}{b_y} = \frac{0,5 \div 0,6}{1,5 \div 1,8}$$

Wie zahlreiche ausgedehnte Quellenversuche zeigten, führt der Bereich, der durch diese Beziehung bestimmt wird, zu einem hohen Grad an hermetischer Abdichtung. Wenn der Bereich der angegebenen Beziehung verlassen wurde, erniedrigte sich der Grad der hermetischen Abdichtung. Bei bedeutenden Störungen des hermetischen Abdichtungsgrads kann der technische Effekt (die Gewährleistung einer Entlastung des Absperrelements von einer einseitigen Einwirkung des Arbeitsmediums), der von der Erfindung erzielt wird, möglicherweise nicht erreicht werden.

Die Form des Sitzes und die Höhe der nicht-metallischen Dichtung gestatten es bei einem Minimalwert für den Nenndruck auf das Abdichtungsmittel eine hohe Abdichtungskennziffer zu erhalten und nicht weniger als 100 000 Arbeitszyklen durchzuführen, ohne daß sie sich verschlechtert.

Das elektromagnetische Ventil arbeitet auf folgende Weise:

1) Bei der Zuführung des Arbeitsmediums mit einem Druck P zum Absperrelement 20 in Richtung des Pfeils A (wobei der Elektromagnetantrieb abgeschaltet ist), wird dieses mit der Kraft $(\pi D_m{}^2/4)\cdot P$ auf den Sitz 2 gedrückt. Aufgrund der Gleichheit des mittleren Durchmessers des Sitzes 2 sowie des Innendurchmessers des unteren Abschnitts 32 des dreiteiligen hermetisch abdichtenden Trennrohrs 7, über das die hermetische Abdichtung der nicht-metallischen Ringdichtung 25 erfolgt, drückt eine genauso große Kraft $(\pi D^2/4)\cdot P$ das Absperrelement 20 vom Sitz 2 weg.
Dabei ist

$D_m$ =   der mittlere Durchmesser des Sitzes 2;
$D$ =   der Innendurchmesser des unteren Abschnitts 32 des dreiteiligen hermetisch abdichtenden Trennrohrs 7.

Auf diese Weise erfolgt eine näherungsweise Entlastung des Absperrventils von einer einseitigen Einwirkung des Arbeitsmediums mit dem Druck P.

Derjenige Teil des Drucks P, der sich als nicht kompensiert erweist, und zwar aufgrund des Unterschieds der Toleranzen des mittleren Durchmessers des Sitzes 2 und des inneren Durchmessers des unteren Abschnitts 32 des dreiteiligen hermetisch abdichtenden Trennrohrs 7, wird durch die Kraft der Rückstellfeder 29 kompensiert, die die erforderliche Kraft für die Abdichtung des Sitzes 2 erzeugt.

## Öffnen des elektromagnetischen Ventils:

Wenn man an die Spule 6 eine Spannung anlegt, wird der Kern 24 zusammen mit dem Absperrelement 20 von dem Sitz 2 weggezogen, wodurch ein Durchgang für den Ausfluß des Arbeitsmediums in Richtung des Pfeils A freigegeben wird. Dabei werden der Biegewiderstand der Rückstellfeder 29 sowie die Reibungskraft der nicht-metallischen Ringdichtung 25 vollständig überwunden. Letztere ist aufgrund des mit Schmiermittel getränkten Elements 26 erniedrigt. Die Reibungskraft der metallischen Oberflächen ist aufgrund der Einführung der Führungshülse 27 erniedrigt.

Die Zugkraft des Elektromagnetantriebs ist ferner deshalb erhöht, weil das dreiteilige hermetisch abdichtende Trennrohr 7 den mittleren Abschnitt 31 aufweist, der aus einem schwach magnetischen Material hergestellt ist. Die Einführung des mittleren Abschnitts 31 gestattet es, den Magnetfluß zu unterbrechen und Verluste des Magnetflusses über das hermetisch abdichtende Trennrohr 7 zu vermeiden.

## Schließen des elektromagnetischen Ventils:

1) Wenn die Spannung abgeschaltet wird, senkt sich der Kern 24 zusammen mit dem Absperrelement 20 unter der Einwirkung der Rückstellfeder 20 auf den Sitz 2 und verschließt den Durchgang für den Ausfluß des Arbeitsmediums in Richtung des Pfeils A.

2) Bei der Zuführung des Arbeitsmediums mit dem Druck P unter das Absperrelement 20 in Richtung des Pfeils B (wobei der Elektromagnetantrieb abgeschaltet ist) wird dieses mit der Kraft $(\pi D_m{}^2/4)\cdot P$ vom Sitz 2 weggedrückt. Gleichzeitig wirkt das Arbeitsmedium durch die Öffnung 23 in dem Absperrelement 20 und den axialen Kanal 28 im Kern 24 auf die nicht-metallische Ringdichtung 25 mit der Kraft $(\pi Dm^2/4)\cdot P$ und drückt den Kern 24, und entsprechend auch das Absperrelement 20 auf den Sitz 2, und zwar infolge der Gleichheit der Durchmesser $D_m$ und D.

Auf diese Weise kommt es zu einer näherungsweisen Entlastung des Absperrventils von einer einseitigen Einwirkung des Arbeitsmediums mit dem Druck P.

Jener Teil des Drucks P, der aufgrund von Unterschieden der Toleranzen des mittleren Durchmessers des Sitzes 2 und des Innendurchmessers des unteren Abschnitts 32 des dreiteiligen hermetisch abdichtenden Trennrohrs 7 nicht ausgeglichen ist, wird durch die Kraft der Rückstellfeder 29 ausgeglichen, die die erforderliche Kraft zur Abdichtung des Sitzes 2 liefert.

Das Öffnen und Schließen des Ventils bei der Zuführung der Spannung erfolgt analog zum oben Beschriebenen.

Wenn es erforderlich ist, das Absperrventil von Hand zu öffnen, dreht man das Handrad 19, und über die Spindel 15 überträgt sich die Kraft auf die Stange 16, die, indem sie sich vorwärtsbewegt, das Absperrelement 20 vom Sitz 2 wegdrückt.

Der positive Effekt, der bei der Verwirklichung der Erfindung erhalten wird, besteht in der Gewährleistung einer Entlastung des Absperrelements von der einseitigen Einwirkung des Arbeitsmediums.

## Industrielle Anwendbarkeit

Die Erfindung kann in den weitesten Bereichen der Technik Anwendung finden, z.B. in der Energietechnik, der chemischen Technik, der Gastechnik, der Lebensmittelindustrie usw..

Zur Zeit wird eine Versuchspartie des elektromagnetischen Ventils mit einem Durchmesser für die Nennweite von 32 mm und einen Arbeitsdruck von 25 $kg/cm^2$ hergestellt. Diese Ventile wurden Werks- und Einsatzerprobungen mit den Arbeitsmedien Propan, Butan, Erdgas, Stickstoff unterzogen, die seine hohe Sicherheit bewiesen. Aufgrund der Ergebnisse der Versuche geht die MNTP "Kriogennaya Tekhnologiya" zur Serienauslieferung des vorliegenden elektromagnetischen Ventils über.

**Patentansprüche**

1. Elektromagnetisches Ventil, das aufweist

   ein Gehäuse (1) mit einem Sitz (2), der von einem Absperrelement (20) verschließbar ist, das eine nicht-metallische Dichtung (21) aufweist,
   einen Elektromagnetantrieb mit einem Magnetleiter (3), der einen unteren (4) und einen oberen Flansch (5) aufweist, mit einem Kern (24), der einen Hohlraum für das Arbeitsmedium aufweist, sowie mit einem hermetisch abdichtenden Trennrohr (7) zwischen dem Magnetleiter (3) und dem Kern (24),
   sowie eine Rückstellfeder (29),

   wobei das hermetisch abdichtende Trennrohr einen Abschnitt (30) aufweist, der aus einem ferromagnetischen Material hergestellt ist, sowie einen darunter angeordneten Abschnitt (31) aus einem schwach magnetischen Material,
   **dadurch gekennzeichnet, daß** der Kern mit einer nicht-metallischen Ringdichtung (25) versehen ist, und daß das hermetisch abdichtende Trennrohr mit einem dritten Abschnitt (32) versehen ist, der

   - aus einem ferromagnetischen Material hergestellt ist und
   - unter dem Abschnitt (31) angeordnet ist, der aus dem schwach magnetischen Material hergestellt ist,

   wobei der Ventilsitz (2) einen mittleren Durchmesser aufweist, der dem Innendurchmesser des genannten dritten Abschnitts (32) gleich ist,
   und wobei die nicht-metallische Ringdichtung (25) des Kerns gegenüber dem genannten dritten Abschnitt (32) und unterhalb des unteren Flanschs (4) des Magnetleiters in einem Abstand angeordnet ist, der nicht geringer ist als der Hub des Kerns.

2. Elektromagnetisches Ventil nach Anspruch 1, dadurch gekennzeichnet, daß der Sitz (2) des Ventils mit einem Ringvorsprung (33) mit einem dreieckigen Querschnitt mit symmetrischem Profil und einer abgerundeten Spitze (34) ausgeführt ist, wobei die nicht-metallische Dichtung (22) des Absperrelements aus Gummi hergestellt ist, wobei die folgende Beziehung erfüllt wird:

$$\frac{h_b}{b_y} = \frac{0,5 \div 0,6}{1,5 \div 1,8}$$

wenn

$$\alpha = 60°$$
$$r = 0,2 \div 0,3 \text{ mm}$$

worin

$h_b =$ die Höhe des Ringvorsprungs;
$b_y =$ die Dicke der nicht-metallischen Dichtung;
$\alpha =$ der Winkel an der Spitze des Vorsprungs mit dreieckigem Querschnitt;
$r =$ der Radius der Abrundung des Vorsprungs.

3. Elektromagnetisches Ventil nach Anspruch 1, dadurch gekennzeichnet, daß der Hohlraum für das Arbeitsmedium im Kern in Form eines axialen Kanals (28) ausgeführt ist, der im oberen Teil einen Bereich mit einem größeren Durchmesser aufweist, in dem die Rückstellfeder (29) angeordnet ist.

4. Elektromagneitsches Ventil nach Anspruch 1, dadurch gekennzeichnet, daß der Kern (24) im unteren Bereich mit einer Führungshülse (27) versehen ist, die aus einem Material mit einem niedrigen Reibungskoeffizienten hergestellt ist.

5. Elektromagnetisches Ventil nach Anspruch 1, dadurch gekennzeichnet, daß unter der nicht-metallischen Ringdichtung ein Element (26) angeordnet ist, das mit einem Schmiermittel getränkt ist.

6. Elektromagnetisches Ventil nach Anspruch 1, dadurch gekennzeichnet, daß im unteren Teil des Gehäuses eine Hand-Ersatzbetätigung angeordnet ist.

**Claims**

1. An electromagnetic valve comprising

   a housing (1) comprising a seat (2) which can be sealed by a cut-off unit (20) having a nonmetallic annular seal (21),
   an electromagnetic actuator comprising a magnetic circuit (3) including a lower (4) and an upper (5) flange, a core (24) having a cavity for the working fluid, and a hermetically sealing separator tube (7) between the magnetic circuit (3) and the core (24),
   and a return spring (29),

   the hermetically sealing separator tube comprising a section (30) made of a ferromagnetic material and a section (31) which is located below it and is made of a low-magnetic material,
**characterized in that** the core is provided with a nonmetallic annular seal (25),
and the hermetically sealing separator tube is supplied with a third section (32) which

- is made of a ferromagnetic material and
- is located below the section (31) made of the low-magnetic material,

and wherein the mean diameter of the valve seat (2) is equal to the inner diameter of said third section (32),
and the nonmetallic annular seal (25) of the core is located opposite the third section (32) and below the lower flange (4) of the magnetic circuit at a distance not smaller than the travel of the core.

2. The electromagnetic valve according to claim 1, characterized in that the valve seat (2) comprises a ring projection (33) which is triangular in cross section and has a symmetrical profile and a rounded apex (34), the nonmetallic seal (22) of the cut-off unit being made of rubber, and the following relation being fulfilled:

$$\frac{h_b}{b_y} = \frac{0.5 \div 0.6}{1.5 \div 1.8}$$

at

$\alpha = 60°$
$r = 0.2 \div 0.3$ mm

wherein

$h_b =$ the height of the ring projection;
$b_y =$ the thickness of the nonmetallic seal,
$\alpha =$ the angle at the apex of the projection with the triangular cross-section;
$r =$ the radius of the rounding of the projection.

3. The electromagnetic valve according to claim 1, characterized in that the cavity for the working fluid of the core is provided as an axial bore (28) having a larger diameter in its upper section in which the return spring (29) is arranged.

4. The electromagnetic valve according to claim 1, characterized in that the core (24) in its lower section is provided with a guide bush (27) made of a low friction coefficient material.

5. The electromagnetic valve according to claim 1, characterized in that below the nonmetallic annular seal an element soaked with a lubricant is arranged.

6. The electromagnetic valve according to claim 1, characterized in that a manual substitute actuator is arranged in the lower section of the housing.

**Revendications**

1. Valve électromagnétique, comprenant :

- un boîtier (1) avec un siège (2), susceptible d'être refermé par un élément obturateur (20), lequel comporte un joint (21) non métallique,

- un entraînement électromagnétique avec un conducteur magnétique (3) qui comporte une bride inférieure (4) et une bride supérieure (5), avec un noyau (24) qui comporte une cavité pour le fluide de travail, et avec un tube de séparation (7) assurant une étanchéité hermétique entre le conducteur magnétique (3) et le noyau (24), et

- un ressort de rappel (29),

dans laquelle le tube de séparation assurant une étanchéité hermétique présente un tronçon (30) qui est réalisé en matériau ferromagnétique, ainsi qu'un tronçon (31) agencé au-dessous et réalisé en matériau faiblement magnétique,
caractérisée en ce que le noyau est pourvu d'un joint annulaire (25) non métallique,
et en ce que le tube de séparation assurant une étanchéité hermétique est pourvu d'un troisième tronçon (32), lequel

- est réalisé en matériau ferromagnétique, et

- est agencé au-dessous du tronçon (31) qui est réalisé avec le matériau faiblement magnétique,

dans laquelle le siège de valve (2) présente un diamètre moyen qui est égal au diamètre intérieur du troisième tronçon précité (32), et
dans laquelle le joint annulaire non métallique (25) du noyau est agencé en vis-à-vis du troisième tronçon précité (32) et au-dessous de la bride inférieure (4) du conducteur magnétique, à une distance qui n'est pas inférieure à la course du noyau.

2. Valve électromagnétique selon la revendication 1, caractérisée en ce que le siège (2) de la valve est réalisé avec une saillie annulaire (33) à section triangulaire de profil symétrique, et avec une pointe arrondie (34), le joint non métallique (22) de l'élément d'obturation étant réalisé en caoutchouc, et dans laquelle la relation suivante est satisfaite :

$$h_b/b_y = (0,5 + 0,6)/(1,5 + 1,8)$$

lorsque $\alpha = 60°$ et $r = 0,2 + 0,3$ mm,
dans laquelle :

    $h_b$ est la hauteur de la saillie annulaire ;
    $b_y$ est l'épaisseur du joint non métallique ;
    $\alpha$ est l'angle à la pointe de la saillie de section
    triangulaire ; et
    $r$ est le rayon de l'arrondi de la saillie.

3.    Valve électromagnétique selon la revendication 1, caractérisée en ce que la cavité pour le fluide de travail dans le noyau est réalisée sous la forme d'un canal axial (28) qui présente dans la partie supérieure une zone de grand diamètre dans laquelle est agencé le ressort de rappel (29).

4.    Valve électromagnétique selon la revendication 1, caractérisée en ce que le noyau (24) est pourvu dans la zone inférieure d'une douille de guidage (27) qui est réalisée en matériau à faible coefficient de friction.

5.    Valve électromagnétique selon la revendication 1, caractérisée en ce sous le joint annulaire non métallique est agencé un élément (26) qui est imbibé avec un produit lubrifiant.

6.    Valve est électromagnétique selon la revendication 1, caractérisée en ce que dans la partie inférieure du boîtier est agencé un moyen d'actionnement manuel de remplacement.

FIG 1

FiG 2

FiG 3